# EUROPÄISCHE PATENTSCHRIFT

(11) **EP 1 957 818 B1**
(45) Veröffentlichungstag und Bekanntmachung des Hinweises auf die Patenterteilung: **11.01.2012**
(21) Anmeldenummer: 06819139.4
(22) Anmeldetag: 25.10.2006
(51) Int. Cl.: F16D 41/10

(54) **Verstellmechanismus für einen Fahrzeugsitz**
Adjusting mechanism for vehicle seat
Mécanisme de réglage pour siège automobile

(30) Priorität: 30.11.2005 DE 102005056978
(43) Veröffentlichungstag der Anmeldung: 20.08.2008
(73) Patentinhaber: Schaeffler Technologies GmbH & Co. KG, 91074 Herzogenaurach (DE)
(72) Erfinder: HOCHMUTH, Harald, 91469 Hagenbüchach (DE); DIRNBERGER, Thomas, 90587 Obermichelbach (DE)
(86) Internationale Anmeldenummer: PCT/EP2006/067758
(87) Internationale Veröffentlichungsnummer: WO 2007/062938

(56) Entgegenhaltungen:
- EP-A2- 1 240 983
- EP-A2- 1 240 983
- DE-A1- 19 750 262
- DE-A1- 19 916 295
- DE-A1-102004 018 025
- DE-A1-102004 018 025
- DE-C1- 19 581 436
- US-A- 3 110 381
- US-A- 3 110 381

## Beschreibung

### Gebiet der Erfindung

Die Erfindung betrifft einen ein Klemmgesperre aufweisenden Verstellmechanismus für einer Fahrzeugsitz. Ein derartiger Verstellmechanismus ist beispielsweise aus der DE 195 81 436 C1 bekannt.

### Hintergrund der Erfindung

Die Dokumente DE 10 2004 018 025 A1, US 3,110,381 A und EP 1 240 983 A2 offenbaren verschiedene Varianten von Klemmrollengesperren, bei denen die Klemmrollen sowohl in einer ersten Richtung der Drehmomentübertragung, im klemmenden Zustand, als auch in der entgegengesetzten Richtung als drehmomentübertragende Elemente fungieren. Diese Klemmrollengesperre finden in Elektrohandwerkzeugen wie Bohrmaschinen oder Schraubern Verwendung.

Das aus der DE 195 81 436 C1 bekannte Klemmgesperre weist, ebenso wie eine aus der DE 41 29 617 A1 bekannte schaltbare Kupplungsvorrichtung, zwei koaxial zueinander angeordnete, um eine gemeinsame geometrische Achse schwenkbare Teile, nämlich ein Antriebselement und ein Abtriebselement auf. Eine Drehung des Abtriebselementes soll nicht möglich sein, solange das Antriebselement nicht betätigt wird. Zu diesem Zweck sind Klemmrollen vorgesehen, welche einerseits an Klemmrampen des Abtriebselementes und andererseits an einer zylindrischen Innenoberfläche eines nicht drehbaren Gehäuses anliegen. Die Klemmrollen sind mit Federkraft in ständiger Klemmbereitschaft gehalten. Um die Blockierung des Abtriebselementes aufzuheben, ist es erforderlich, diejenigen Klemmrollen, die eine Verdrehung des Abtriebselementes in einer bestimmten Drehrichtung verhindern, aus ihrer Klemmposition zu verdrängen. Dies geschieht mittels Klauen, die am Antriebselement angebracht sind. Die Klauen haben zugleich die Aufgabe, bei einer Verdrehung des Antriebselementes das Abtriebselement mitzunehmen. Hierfür weist das Abtriebselement Anschläge auf, an denen die Klauen angreifen können. Bei den Vorrichtungen nach der DE 41 29 617 A1 sowie nach der DE 195 81 436 C1 handelt es sich insgesamt um ausgereifte Konstruktionen:

### Aufgabe der Erfindung

Der Erfindung liegt die Aufgabe zugrunde, eine Sitzverstellung mit einem zweirichtungsschaltbaren Klemmgesperre weiterzuentwickeln.

### Zusammenfassung der Erfindung

Diese Aufgabe wird erfindungsgemäß gelöst durch einen ein Klemmgesperre aufweisenden Verstellmechanismus mit den Merkmalen des Anspruchs 1. Das Klemmgesperre umfasst ein drehbares Antriebselement, ein koaxial zu diesem drehbares Abtriebselement, ein eine Klemmfläche aufweisendes Gehäuse, sowie mindestens einen Klemmkörper, vorzugsweise mehrere Klemmkörper, welche dazu vorgesehen sind, das Abtriebselement gegenüber dem Gehäuse zu blockieren. Die Blockierung, d.h. die Klemmwirkung, kann aufgehoben werden, indem das Antriebselement verschwenkt wird. Beim Verschwenken des Antriebselementes wird dasselbe Klemmelement, das zuvor die Verdrehung des Abtriebselementes in einer bestimmten Richtung verhindert hat, genutzt, um ein Drehmoment vom Antriebselement auf das Abtriebselement zu übertragen. Der Klemmkörper hat also eine Doppelfunktion, nämlich einerseits die Funktion, eine Drehung des Abtriebselementes relativ zum Gehäuse bei Nichtbetätigung des Antriebselementes zu verhindern, und andererseits, ein in das Antriebselement eingeleitetes Drehmoment auf das Abtriebselement zu übertragen und damit dieses mitzudrehen.

Diese Doppelfunktion der Klemmkörper, insbesondere Klemmrollen, beansprucht im Vergleich zu herkömmlichen Klemmgesperren keinen zusätzlichen Bauraum.

Um das in das Antriebselement eingeleitete Drehmoment über den Klemmkörper auf das Abtriebselement zu übertragen, weist dieses vorzugsweise einen sich in Richtung eines zwischen Abtriebselement und Gehäuse gebildeten Ringraums erstreckenden Vorsprung auf, der einen Anschlag für das Klemmelement, insbesondere die Klemmrolle, bildet. Eine Anschlagsfläche am Abtriebselement für einen direkten Angriff des Antriebselementes ist dagegen nicht vorgesehen. Das Abtriebselement erlaubt damit eine im Vergleich zu herkömmlichen Klemmgesperren besonders dichte Bestückung mit Klemmelementen, wodurch eine in Relation zu den Abmessungen des Klemmgesperres hohe Drehmomentübertragung möglich ist.

In vorteilhafter Ausgestaltung bildet ein einziger radial nach außen gerichteter Vorsprung des Abtriebselementes zwei Anschläge für ein Paar an Klemmelementen, die, sofern sie nicht mittels des Antriebselementes aus ihrer Klemmposition verdrängt sind, in entgegengesetzten Drehrichtungen wirksam sind. Diese Anschläge, die eine Kraft- und damit Drehmomentübertragung vom Antriebselement über wahlweise eines der beiden Klemmelemente auf das Abtriebselement ermöglichen; befinden sich zwischen zwei Klemmrampen, die am Umfang des Abtriebselementes ausgebildet sind.

Ein als Druckfeder ausgebildetes Federelement, welches die beiden dem Vorsprung des Abtriebselementes benachbarten Klemmelemente in Klemmbereitschaft hält, befindet sich innerhalb des zwischen dem Abtriebselement und dem Gehäuse gebildeten Ringraums im selben Umfangsbereich wie der Vorsprung des Abtriebselementes. Da keines der Klemmelemente den Vorsprung überwinden, etwa überrollen, kann, ist in vorteilhafter Weise nur eine begrenzte Kompression des Federelementes möglich. Vorzugsweise sind der Vorsprung des Abtriebselementes sowie das Federelement derart gestaltet, dass das Federelement, welches bevorzugt als Schraubenfeder ausgebildet ist, in keinem Betriebszustand des Klemmgesperres auf Block geht. Eine Überbeanspruchung des Federelementes, welche zu einer Verkürzung der Lebensdauer des Klemmgesperres führen würde, ist somit prinzipbedingt ausgeschlossen. Nachfolgend wird ein Ausführungsbeispiel der Erfindung anhand einer Zeichnung näher erläutert. Hierin zeigen:

### Kurze Beschreibung der Zeichnung

- Figur 1: im Querschnitt ein Klemmgesperre mit blockiertem Abtriebselement, und
- Figur 2: in einer Darstellung analog Figur 1 das Klemmgesperre mit angetriebenem Abtriebselement.

### Ausführliche Beschreibung der Zeichnung

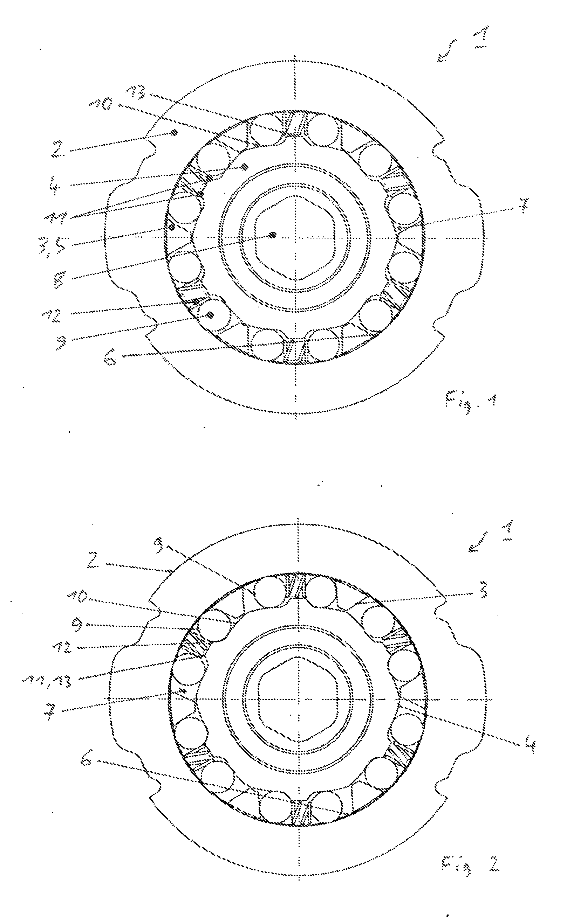

Die Figuren 1 und 2 zeigen ein in einer Sitzverstellung eines Kfz verwendbares Klemmgesperre 1 in verschiedenen Betriebszuständen, nämlich im gesperrten Zustand (Figur 1) sowie im angetriebenen Zustand (Figur 2). In einem nicht drehbaren Gehäuse 2 des Klemmgesperres 1 sind koaxial zueinander und drehbar ein Antriebselement 3 sowie ein Antriebselement 4 angeordnet. Vom Antriebselement 3 sind ausschließlich mehrere, im Ausführungsbeispiel sechs, Klauen 5 sichtbar, die in einen zwischen dem Abtriebselement 4 und der zylindrischen Innenwandung 6 des Gehäuses 2 gebildeten Ringraum 7 eingreifen. Das Abtriebselement 4 ist drehfest mit einer Abtriebswelle 8 verbunden, die wiederum drehfest mit einem nicht dargestellten Abtriebszahnrad verbunden oder einstückig ausgebildet ist. Zwischen jeweils zwei Klauen 5 des Abtriebselements 4 befinden sich im Ringraum 7 zwei Klemmkörper 9, nämlich Klemmrollen. Jeder Klemmkörper 9 liegt sowohl an der eine Klemmfläche bildenden Innenwandung 6 des Gehäuses 2 als auch an einer an der Oberfläche des Abtriebselementes 4 ausgebildeten Klemmrampe 10 an. Die beiden im Ringraum 7 zwischen zwei Klauen 5 befindlichen Klemmrampen 10 sind in unterschiedlichen Richtungen geneigt, so dass das Paar der zwischen den Klauen 5 angeordneten Klemmkörper 9 in entgegengesetzten Drehrichtungen klemmt. Um ständige Klemmbereitschaft zu gewährleisten, werden die Klemmkörper 9 durch ein zwischen diese eingespanntes, als Schraubenfeder ausgebildetes Federelement 12 jeweils gegen eine Klemmrampe 10 gedrückt. In demjenigen Umfangsbereich, in dem sich das Federelement 12 befindet, ist zwischen den beiden Klemmrampen 10 ein radial nach außen gerichteter Vorsprung 13 des Abtriebselementes 4 ausgebildet. Solange sich das Abtriebselement 4, wie in Figur 1 dargestellt, in blockierter Position befindet, begrenzt der Vorsprung 13 den dem Federelement 12 zur Verfügung stehenden Raum, hat jedoch ansonsten keine Funktion.

In der Anordnung nach Figur 2 ist das Antriebselement 3 im Vergleich zur Anordnung nach Figur 1 im Gegenuhrzeigersinn verdreht. Die Klauen 5 nehmen als Teile eines Schaltkäfigs bei der Verdrehung des Antriebselementes 3 jeden zweiten der Klemmkörper 9 mit und bringen diesen zur Anlage an einem der - entsprechend der Anzahl der Klauen 5 - insgesamt sechs Vorsprünge 13 des Abtriebselementes 4. An den Vorsprüngen 13 gebildete, den Klemmrampen 10 benachbarte Kanten 11 werden auch als Popoutkanten bezeichnet. Der am Umfang des Abtriebselementes 4 gebildete Übergang zwischen der Klemmrampe 10 und dem Vorsprung 13 ist ausgerundet, um eine flächige Anlage des Klemmkörpers 9 am Abtriebselement 4 zu ermöglichen.

Die Klemmkörper 9 sind damit dazu geeignet, als drehmomentübertragende Elemente zwischen dem Antriebselement 3 und dem Abtriebselement 4 zu wirken. Das Federelement 12 wird bei der Verdrehung des Abtriebselementes 4 mittels des Antriebselementes 3 komprimiert, wobei durch die Gestaltung des Vorsprungs 13 sichergestellt ist, dass stets ein Restfederweg erhalten bleibt. Diejenigen Klemmkörper 9, die in der Anordnung nach Figur 2 nicht die Klauen 5 kontaktieren, blockieren nur bei Verdrehung des Antriebselementes 3 im Uhrzeigersinn, so dass das Abtriebselement 4 vom Antriebselement 3 im Gegenuhrzeigersinn angetrieben werden kann. In analoger Weise ist das Abtriebselement 4 durch das Antriebselement 3 auch im Uhrzeigersinn antreibbar.

### Bezugszeichen liste

- 1: Klemmgesperre
- 2: Gehäuse
- 3: Antriebselement
- 4: Abtriebselement
- 5: Klaue
- 6: Innenwandung, Klemmfläche
- 7: Ringraum
- 8: Abtriebswelle
- 9: Klemmkörper
- 10: Klemmrampe
- 11: Kante
- 12: Federelement
- 13: Vorsprung

## Patentansprüche

1. Verstellmechanismus für einer Fahrzeugsitz, aufweisend ein Klemmgesperre (1) mit einem Antriebselement (3) und einem Abtriebselement (4), welche relativ zu einem Gehäuse (2) drehbar sind, wobei ein Klemmkörper (9) eine Drehmomenteinleitung vom Abtriebselement (4) in das Gehäuse (2) ermöglicht und die Klemmwirkung dieses Klemmkörpers (9) durch Verdrehung des Antriebselementes (3) aufhebbar ist, und wobei der Klemmkörper (9) zur Drehmomentübertragung vom Antriebselement (3) auf das Abtriebselement (4) vorgesehen ist.

2. Verstellmechanismus nach Anspruch 1, **gekennzeichnet durch** ein Paar an Klemmkörpern (9), gebildet aus einem ersten Klemmkörper (9), welcher eine Drehmomentübertragung zwischen dem Abtriebselement (4) und dem Gehäuse (2) in einer ersten Drehrichtung ermöglicht, und einem zweiten Klemmkörper (9), welcher eine Drehmomentübertragung zwischen dem Abtriebselement (4) und dem Gehäuse (2) in der entgegengesetzten Drehrichtung ermöglicht.

3. Verstellmechanismus nach Anspruch 2, **dadurch gekennzeichnet, dass** das Gehäuse (2) eine innere zylindrische Klemmfläche (6) aufweist, die einen Ringraum (7) begrenzt, in welchem die Klemmkörper (9) angeordnet sind, und das Abtriebselement (4) mit den Klemmkörpern (9) zusammenwirkende Klemmrampen (10) aufweist, wobei in Umfangsrichtung benachbarte Klemmrampen (10) in entgegengesetzten Richtungen relativ zur Klemmfläche (6) geneigt sind, und im Ringraum (7) ein Federelement (12) angeordnet ist, welches die Klemmkörper (9) mit einer Kraft in Richtung zu deren jeweiliger Klemmposition beaufschlagt, und das Abtriebselement (4) in demjenigen Umfangsbereich, in dem das Federelement (12) angeordnet ist, einen radial nach außen gerichteten Vorsprung (13) aufweist, der jeweils einen bei einer Verdrehung des Antriebselementes (3) wirksamen Anschlag für jeden der Klemmkörper (9) bildet.

4. Verstellmechanismus nach Anspruch 3, **dadurch gekennzeichnet, dass** der Vorsprung (13) des Abtriebselementes (4) derart geformt ist, dass das Federelement (12) nicht durch Einwirkung eines oder mehrerer Klemmkörper (9) vollständig komprimierbar ist.

5. Verstellmechanismus nach Anspruch 3 oder 4, **dadurch gekennzeichnet, dass** als Federelement (12) eine Schraubenfeder vorgesehen ist.

## Claims

1. Adjusting mechanism for a vehicle seat, having a clamping-type locking mechanism (1) with a driving element (3) and an output element (4), which are rotatable relative to a housing (2), wherein a clamping body (9) permits torque to be introduced into the housing (2) by the output element (4), and the clamping action of said clamping body (9) can be cancelled by rotation of the driving element (3), and wherein the clamping body (9) is provided for transmitting torque from the driving element (3) to the output element (4).

2. Adjusting mechanism according to Claim 1, **characterized by** a pair of clamping bodies (9), formed from a first clamping body (9) which permits torque to be transmitted between the output element (4) and the housing (2) in a first direction of rotation, and a second clamping body (9) which permits torque to be transmitted between the output element (4) and the housing (2) in the opposite direction of rotation.

3. Adjusting mechanism according to Claim 2, **characterized in that** the housing (2) has an inner cylindrical clamping surface (6) which delimits an annular space (7) in which the clamping bodies (9) are arranged, and the output element (4) has clamping ramps (10) which interact with the clamping bodies (9), clamping ramps (10) which are adjacent in the circumferential direction being inclined in opposite directions relative to the clamping surface (6), and a spring element (12) being arranged in the annular space (7), the spring element acting upon the clamping bodies (9) with a force in the direction of the respective clamping position thereof, and the output element (4) having, in the same circumferential region in which the spring element (12) is arranged, a radially outwardly directed projection (13) which in each case forms a stop, which is effective upon rotation of the driving element (3), for each of the clamping bodies (9).

4. Adjusting mechanism according to Claim 3, **characterized in that** the projection (13) of the output element (4) is shaped in such a manner that the spring element (12) cannot be fully compressed by the action of one or more clamping bodies (9).

5. Adjusting mechanism according to Claim 3 or 4, **characterized in that** a helical spring is provided as the spring element (12).

## Revendications

1. Mécanisme de réglage pour un siège de véhicule, présentant un verrou de serrage (1) avec un élément d'entraînement (3) et un élément de sortie (4) qui peuvent tourner par rapport à un boîtier (2), un corps de serrage (9) permettant l'introduction d'un couple par l'élément de sortie (4) dans le boîtier (2) et l'effet de serrage de ce corps de serrage (9) pouvant être supprimé par la rotation de l'élément d'entraînement (3) et le corps de serrage (9) étant prévu pour le transfert de couple de l'élément d'entraînement (3) à l'élément de sortie (4).

2. Mécanisme de réglage selon la revendication 1, **caractérisé par** une paire de corps de serrage (9) formés d'un premier corps de serrage (9) qui permet un transfert de couple entre l'élément de sortie (4) et le boîtier (2) dans un premier sens de rotation et d'un deuxième corps de serrage (9) qui permet un transfert de couple entre l'élément de sortie (4) et le boîtier (2) dans le sens de rotation opposé.

3. Mécanisme de réglage selon la revendication 2, **caractérisé en ce que** le boîtier (2) présente une surface de serrage cylindrique (6) qui limite un espace annulaire (7) dans lequel sont disposés les corps de serrage (9), et l'élément de sortie (4) présente des rampes de serrage (10) coopérant avec les corps de serrage (9), des rampes de serrage (10) adjacentes dans la direction périphérique étant inclinées dans des directions opposées par rapport à la surface de serrage (6), et dans l'espace annulaire (7) étant disposé un élément de ressort (12) qui sollicite les corps de serrage (9) avec une force dans la direction de leur position de serrage respective et l'élément de sortie (4), dans la région périphérique respective dans laquelle est disposé l'élément de ressort (12), présente une saillie (13) orientée radialement vers l'extérieur, qui forme à chaque fois une butée agissant dans le cas d'une rotation de l'élément d'entraînement (3) pour chacun des corps de serrage (9).

4. Mécanisme de réglage selon la revendication 3, **caractérisé en ce que** la saillie (13) de l'élément de sortie (4) est formée de telle sorte que l'élément de ressort (12) ne puisse pas être comprimé complètement par l'action d'un ou de plusieurs corps de serrage (9).

5. Mécanisme de réglage selon la revendication 3 ou 4, **caractérisé en ce que** l'on prévoit comme élément de ressort (12) un ressort à boudin.
